# EUROPÄISCHE PATENTSCHRIFT

(11) **EP 1 127 233 B1**
(45) Veröffentlichungstag und Bekanntmachung des Hinweises auf die Patenterteilung: **31.07.2002**
(21) Anmeldenummer: 99957989.9
(22) Anmeldetag: 03.11.1999
(51) Int. Cl.: F16H 61/38, F16H 61/12

(54) **EINRICHTUNG ZUM STEUERN EINES AUTOMATIKGETRIEBES**
DEVICE FOR CONTROLLING AN AUTOMATIC GEARBOX
DISPOSITIF POUR COMMANDER UNE TRANSMISSION AUTOMATIQUE

(30) Priorität: 06.11.1998 DE 19851159
(43) Veröffentlichungstag der Anmeldung: 29.08.2001
(73) Patentinhaber: ZF Batavia, L.L.C., Batavia, OH 45103 (US)
(72) Erfinder: GIERLING, Armin, D-88085 Langenargen (DE)
(74) Vertreter: Zietlow, Karl-Peter
(86) Internationale Anmeldenummer: EP9908423
(87) Internationale Veröffentlichungsnummer: WO0028242

(56) Entgegenhaltungen:
- EP-A- 0 229 900
- DE-A- 4 436 506
- GB-A- 2 252 369

## Beschreibung

Die vorliegende Erfindung betrifft eine Einrichtung zum Steuern eines Automatikgetriebes, insbesondere eines CVT, das mit einem pendelnd aufgehängten Antrieb, insbesondere einem Verbrennungsmotor für ein Kraftfahrzeug mit Front-Quer-Antrieb, verbunden ist, nach dem Oberbegriff des Anspruchs 1.

Ein CVT ist ein Getriebe mit einem Variator zur stufenlosen Einstellung der Übersetzung. Eine bekannte Ausführung ist ein Umschlingungsvariator mit einem ersten Kegelscheibenpaar auf einer Antriebswelle und mit einem zweiten Kegelscheibenpaar auf einer Abtriebswelle, wobei jedes Kegelscheibenpaar aus einer in axialer Richtung feststehenden ersten Scheibe und einer in axialer Richtung verschiebbaren zweiten Scheibe (Primärscheiben bzw. Sekundärscheiben) besteht. Zwischen den Kegelscheibenpaaren läuft ein Umschlingungsorgan, z. B. ein Schubgliederband. Die Verstellung der Primärscheibe bzw. Sekundärscheibe erfolgt durch ein Druckmedium mit Hilfe eines elektronischen Steuergerätes, welches über elektromagnetische Stellglieder und hydraulische Ventile das Druckniveau der Stellräume von Primärscheibe und Sekundärscheibe ansteuert.

Aus der DE 42 34 103 A ist eine Einrichtung zum Steuern des Druckes der Primärscheibe bekannt. Die Einrichtung umfaßt ein elektromagnetisch gesteuertes Primärventil und ein hydraulisches Sekundärventil. Das Primärventil wird von einem elektronischen Steuergerät angesteuert. Wird die Leitung vom elektronischen Steuergerät zum Primärventil unterbrochen, so geht die Einrichtung in einen Notfahrbetrieb über. Hierbei wird das Druckniveau der Primärscheibe durch das Sekundärventil bestimmt. Die Stellung des Sekundärventils wiederum wird über eine mechanische Kupplung von der Primärscheibe bestimmt. Diese bekannte Einrichtung hat den Nachteil, daß sie einen vollständigen Ausfall des elektronischen Steuergeräts nicht abdeckt.

In der älteren deutschen Patentanmeldung DE 44 36 506 A der Anmelderin wurde eine Einrichtung zum Steuern eines von einer Antriebseinheit angetriebenen CVT nach dem Oberbegriff des Anspruchs 1 vorgeschlagen, bei der ein elektronisches Steuergerät über elektromagnetische Stellglieder und hydraulische Ventile das Druckniveau der insbesondere dynamisch nicht ausgeglichenen Stellräume von Primär- und Sekundärscheibe bestimmt und bei der bei einem Ausfall des elektronischen Steuergerätes eine Notfahreinrichtung aktiviert wird, die zwei Druckregelventile, zwei Druckreduzierventile und mindestens ein Notventil aufweist, wobei ein Primärventil und ein Sekundärventil ein konstantes, statisches Druckverhältnis bzw. Kraftverhältnis zwischen Primärscheibe und Sekundärscheibe bei konstantem, statischen Sekundär-Druckniveau einstellt. Über den Betrag dieses statischen Kraftverhältnisses und der dynamischen Kräfte an den Scheiben läßt sich dabei festlegen, wie groß die Übersetzungsänderung des CVT vom Normalbetrieb zum Notfahrbetrieb ist. Unter Notfahrbetrieb ist dabei derjenige Zustand eines CVT zu verstehen, bei dem keine Drehzahlregelung und keine Anpreßdruckregelung der Sekundärscheibe erfolgt.

Bei dieser bekannten Einrichtung variiert die Übersetzung des CVT in Abhängigkeit von dem abgegebenen Moment einer Antriebseinheit, insbesondere einer Brennkraftmaschine, wobei die variable Übersetzungsänderung im Notfahrbetrieb ein sicheres Anfahren am Berg und eine verbesserte Fahrbarkeit mit hoher Endgeschwindigkeit ermöglicht. Als Eingangssignal wird z. B. das Signal einer Laststellung der Antriebseinheit (Drosselklappenstellung im Falle einer Brennkraftmaschine), die Drehzahl der Getriebeeingangswelle, die Drehzahl der Abtriebswelle bzw. die Temperatur eines Druckmediums verwendet. Ein elektronisches Steuergerät bestimmt aus dem Eingangssignal einen Betriebspunkt und stellt den dazugehörigen Drehzahlwert der Getriebeeingangswelle oder die Übersetzung des CVT ein. Tritt ein Fehler auf, so geht das CVT in den Notfahrbetrieb über, bei dem keine Drehzahlregelung und keine Anpreßdruckregelung der Sekundärscheibe mehr erfolgt.

Im Notfahrbetrieb fördert eine Pumpe Druckmedium zu einem ersten und zu einem zweiten Druckreduzierventil, die mit einem ersten bzw. zweiten elektromagnetischen Druckregelventil verbunden sind. Die beiden elektromagnetischen Druckregelventile sind wiederum mit einem ersten und einem zweiten Notventil verbunden, wobei letztere mit einem Primärventil und einem Sekundärventil verbunden sind, die über entsprechende Leitungen direkt mit der Pumpe verbunden sind. Das Primärventil bestimmt das Druckniveau des Stellraumes der Primärscheibe und das Sekundärventil bestimmt das Druckniveau des Verstellraums der Sekundärscheibe. Die Schaltstellungen der beiden Notventile werden durch das erste elektromagnetische Druckregelventil bestimmt.

Nachteilig bei dieser bekannten Einrichtung ist jedoch noch die Auslegungsnotwendigkeit des Anpreßdrucks für die entsprechenden Scheiben nach den extremen Eckpunkten des Fahrbarkeitsbereichs. So ist für die Variatorübertragungsfähigkeit bei niedriger Übersetzung und hohem Antriebsmoment ein hoher Anpreßdruck an der Sekundärscheibe erforderlich. Bedingt durch das Konzept des konstanten, statischen Druckverhältnisses zwischen Primärscheibe und Sekundärscheibe und der gewählten Ansteuerung der Notventile ist die eingestellte statische Kraft an der Sekundärscheibe im gesamten Momentenbereich konstant, wobei sich der Betrag nach dem maximal zu übertragenden Antriebsmoment richtet. Dies führt aber in allen anderen Betriebszuständen zu einer Überanpressung, die sich nachteilig auf die Betriebstemperatur mit erhöhtem Wirkungsgradverlust und auf den Verschleiß auswirkt.

Aus der EP-A 584 457 ist eine Einrichtung zur geregelten Zu- und Abkopplung der Fahrkupplung im Getriebe einer aus einem Motor und einem elektrohydraulisch betätigbaren Automatikgetriebe bestehenden Antriebseinrichtung eines Kraftfahrzeuges bekannt, wobei zur Ermittlung der Verspannung zwischen der Antriebseinrichtung und der Karosserie die Verlagungsstrecke der Antriebseinrichtung gegenüber der Karosserie gemessen und einer Getriebesteuerungseinrichtung zugeleitet wird, welche den Steuerdruck in der Fahrkupplung, des Getriebes bei bestimmten Fahrsituationen derart einstellt, daß die Fahrkupplung zu schleifen beginnt. Anstelle der Verlagerungsstrecke der Antriebseinrichtung kann zur Steuerung der Fahrkupplung das Abtriebsdrehmoment des Getriebes oder die Information der Stützkraft in den Stützlagern der Antriebseinrichtung verwendet werden. Das Getriebe ist als elektrohydraulisch steuerbares Automatikgetriebe ausgebildet, das über eine elektrohydraulische Steuerungseinrichtung betätigbar ist, welche ihre Steuerungsbefehle von der Getriebesteuerungseinrichtung erhält sowie von einem Sensor zur Messung der Kraft in den Stützlagern für die Antriebseinrichtung. Mit dieser bekannten Einrichtung läßt sich ausschließlich eine Fahrkupplung, z. B. zur Verminderung des Standschüttelns beim Stillstand des Fahrzeugs, bei eingelegtem Gang und bei gebremsten Antriebsrädern zu- bzw. abkoppeln.

Aufgabe der Erfindung ist es, eine Notfahr-Einrichtung für die elektrohydraulische oder auch nur hydraulische Steuerung eines CVT-Getriebes zu schaffen unter Verwendung eines motormotormomentenäquivalenten Eingangssignals, mit der die oben erwähnte Überanpressung der Variatorscheiben vermieden ist.

Ausgehend von einer Einrichtung der eingangs näher genannten Art erfolgt die Lösung dieser Aufgabe durch die im kennzeichnenden Teil des Anspruchs 1 angegebenen Merkmale; vorteilhafte Ausgestaltungen sind in den Unteransprüchen beschrieben.

Erfindungsgemäß wird vorgeschlagen, daß Drehmomentensignale der Antriebseinheit zur Einstellung eines variablen Druckniveaus bei konstantem, statischen, von der hydraulischen Getriebesteuerung eingestellten Druckverhältnis zwischen Primär- und Sekundärscheibe dienen. Der Erfindung liegt dabei die Erkenntnis zugrunde, daß das von der Antriebseinheit, d. h. dem Verbrennungsmotor, abgegebene Drehmoment abgestützt werden muß. An dieser Abstützung mittels einer Drehmomentstütze kann ein dem realen Antriebsmoment äquivalentes Signal, d. h. ein motormomentenäquivalentes Signal abgegriffen werden. Ein bevorzugtes Anwendungsbeispiel sind dabei Aggregatkombinationen aus Verbrennungsmotor und CVT-Getriebe in Front-Quer-Anordnung mit Pendellagerung. Hier kann das Stützmoment direkt an der Drehmomentstütze gemessen werden, z. B. mittels eines Drucksensors oder eines Verlagerungswegsensors.

Der Erfindung liegt weiter die Erkenntnis zugrunde, daß das motormomentenäquivalente Signal im Notfahrbetrieb uneingeschränkt zur Verfügung stehen muß, d. h. auch bei komplettem Ausfall der elektronischen Steuerung. Insbesondere eignen sich für die Übertragung des motormomentenäquivalenten Signals zur Getriebesteuerung Hydromotore, die als Linearmotore oder Drehmotore ausgebildet sein können, und die direkt an der Drehmomentenstütze (z. B. der Getriebestütze) des Verbrennungsmotors angeordnet sind und die hydraulisch mit: der Getriebesteuerung verbunden sind.

Mit dem motormomentenäquivalenten Stützmoment wird das Druckniveau an Primär- und Sekundärscheibe des CVT unter Beibehaltung des hydraulisch festgelegten, konstanten, statischen Druckverhältnisses moduliert.

Bedingt durch die motormomentenäquivalente Modulierung des Druckniveaus an der Sekundärscheibe im Notfahrbetrieb kann die Überanpressung erheblich verringert werden und zwar bis zu einem Sicherheitswert, der dynamische Triebstrangeffekte und getriebespezifische Toleranzen berücksichtigt.

Einen positiven Einfluß hat die Absenkung des Druckniveaus im Notfahrbetrieb insbesondere auf das Temperaturniveau des CVT, da bisher die enorme auftretende Überanpressung bei hohen Geschwindigkeiten ein Eckpunkt bei der Kühlauslegung war. Ein weiterer positiver Einfluß der Druckabsenkung ist im verminderten Variatorverschleiß zu sehen.

Ein weiterer Vorteil der erfindungsgemäßen Einrichtung liegt in der möglichen Nutzung des motormomentenäquivalenten Druckes auch außerhalb des Notfahrbetriebs. So kann das motormomentenäquivalente Signal zur direkten Beaufschlagung des Sekundärventils und des Kupplungsventils genutzt werden, um Triebstrangdynamik direkt hydraulisch umzusetzen. Besondere Vorteile liegen hierbei in der Verfügbarkeit einer motortoleranzunabhängigen Größe und einer dadurch möglichen Absenkung der Überanpressungen, d. h. der Reduzierung der Sicherheitszuschläge mit der Folge von Wirkungsgradverbesserungen des Getriebes.

Im folgenden wird die Erfindung anhand der Zeichnung näher erläutert, in der zwei vorteilhafte Ausführungsbeispiel dargestellt sind.
Es zeigen:
- Fig. 1: ein Hydraulikschema einer erfindungsgemäßen Steuereinrichtung für ein CVT mit motormomentenmoduliertem Druckregelventil und zwei Notventilen und
- Fig. 2: ein Hydraulikschema einer Steuereinrichtung für ein CVT mit motormomentenmoduliertem Druckregelventil und einem Notventil.

In bekannter Weise besteht das nicht im einzelnen dargestellte CVT, das mit einer pendelnd aufgehängten Brennkraftmaschine in einem Kraftfahrzeug mit Front-Quer-Antrieb verbunden ist, aus einem hydrodynamischen Wandler mit Überbrückungskupplung, einem Wendesatz, einem ersten Kegelscheibenpaar, einem zweiten Kegelscheibenpaar, einem Umschlingungsorgan und einem hydraulischen Steuergerät. Die mit der Brennkraftmaschine verbundene Antriebswelle treibt den hydrodynamischen Wandler an, der in herkömmlicher Weise ein Pumpenrad, ein Turbinenrad und ein Leitrad aufweist. Eine Getriebeeingangswelle treibt einen Wendesatz an, über den die Drehzahl der Getriebeeingangswelle direkt auf das erste Kegelscheibenpaar übertragen wird, sofern nicht eine Drehrichtungsumkehr für Rückwärtsfahrt erfolgt (ältere deutsche Patentanmeldung DE 44 36 506 A der Anmelderin).

Mit S1 ist in den Figuren schematisch die Primärscheibe und mit S2 schematisch die Sekundärscheibe eines Kegelscheibenpaars bezeichnet. Aufgrund der axialen Verschiebbarkeit von Primärscheibe bzw. Sekundärscheibe ändert sich der Laufradius des nur schematisch gestrichelt angedeuteten Umschlingungsorgans, wodurch sich die Drehzahl der Getriebewelle bzw. die Übersetzung des CVT ändert.

Das CVT wird von einem nicht dargestellten elektronischen Steuergerät mittels elektromagnetischer Stellglieder und hydraulischer Ventile gesteuert. Über diese Stellglieder werden die Kupplungen und Bremsen bzw. deren Druckverlauf gesteuert.

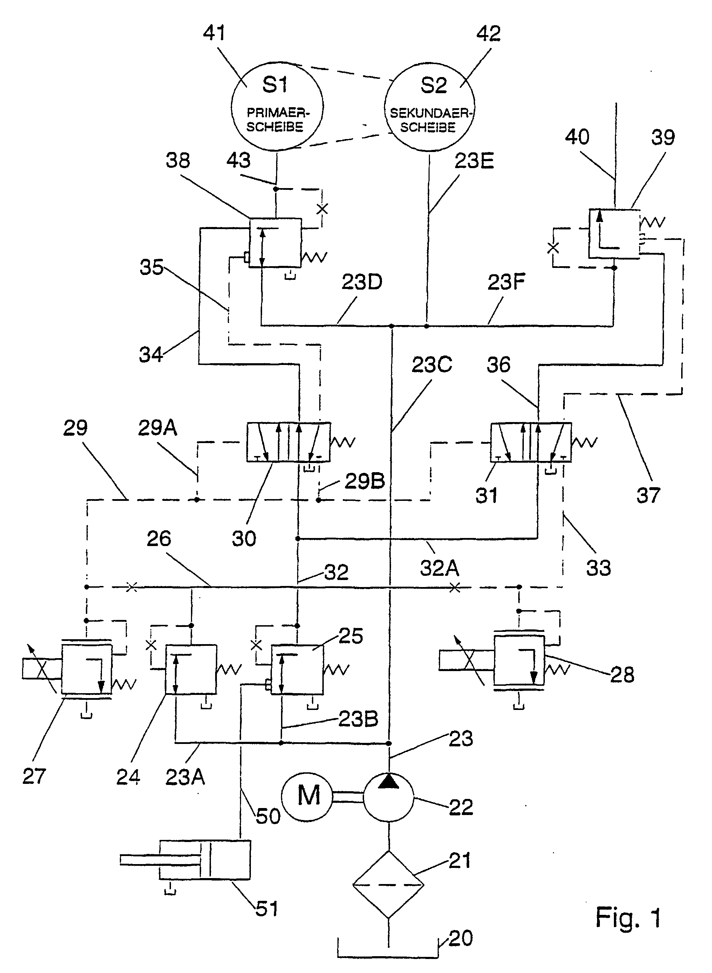

Fig. 1 zeigt ein Hydraulikschema mit zwei Notventilen. Eine von der Antriebseinheit oder vom Pumpenrad angetriebene Pumpe 22 fördert aus einem Schmiermittelsumpf 20 über ein Filter 21 Druckmedium in eine Leitung 23. Die Leitung 23 hat eine Abzweigung 23A zu einem ersten Druckreduzierventil 24 und eine Abzweigung 23B zu einem zweiten Druckreduzierventil 25. Desweiteren zweigt aus de Leitung 23 eine Leitung 23C ab, die mit Abzweigungen 23D zu einem Primärventil 38, einer Abzweigung 23E zu einem Verstellraum 42 einer Sekundärscheibe S2 und einer Abzweigung 23F zu einem Sekundärventil 39 versehen ist.

An eine Leitung 26 ist ein erstes elektromagnetisches Druckregelventil 27 und ein zweites elektromagnetisches Druckregelventil 28 angeschlossen. Über die beiden Druckregelventile 27 und 28 läßt sich der Druck in den Leitungen 29 und 33 einstellen.

Ein erstes Notventil 30 und ein zweites Notventil 31 sind mit der Leitung 29 bzw. deren Abzweigungen 29A und 29B verbunden. Das erste Druckregelventil 27 wirkt über die Abzweigung 29A auf das erste Notventil 30 ein und über die Leitung 29 auf das zweite Notventil 31. Die beiden Notventile 30 und 31 besitzen eine erste Stellung A für den Notfahrbetrieb und eine zweite Stellung B. Das erste Notventil 30 ist über Leitungen 34 und 35 mit dem Primärventil 38 verbunden, das als Druckreduzierventil ausgebildet ist. Das zweite Notventil 31 ist über Leitungen 36 und 37 mit dem Sekundärventil 39 verbunden, das als Druckbegrenzungsventil für die Sekundärseite (Leitung 23 bzw. 23A bis 23F) ausgestaltet ist. Das Primärventil 38 stellt über die Leitung 43 das Druckniveau des Verstellraumes 41 der Primärscheibe S1 ein.

Mit 51 ist ein Hydromotor bezeichnet, der als hydraulischer Linearmotor oder hydraulischer Drehmotor ausgestaltet sein kann und der über eine Leitung 50 mit dem zweiten Druckreduzierventil 25 verbunden ist. Der Hydromotor 51 wird nun mit der motormomentenäquivalenten Stützkraft oder dem motormomentenäquivalenten Verlagerungsweg an der Drehmomentenstütze der Motoraufhängung beaufschlagt, wodurch das Druckreduzierventil 25 ebenfalls mit dem Motormoment indirekt moduliert wird. Im normalen Fahrbetrieb werden die Primärscheibe S1 und die Sekundärscheibe S2 des CVT in bekannter Weise über die Druckregler 27 und 28 zur Übersetzungs- und Anpreßregelung angesteuert, wobei sich die Notventile 30 und 31 in Stellung B befinden. Im Notfahrbetrieb befinden sich die Notventile 30 und 31 in Stellung A, wodurch das Druckreduzierventil 25, das mit dem motormomentenäquivalenten Druck des Hydromotors 51 beaufschlagt wird, das Druckniveau von Primärventil 38 und Sekundärventil 39 bestimmt.

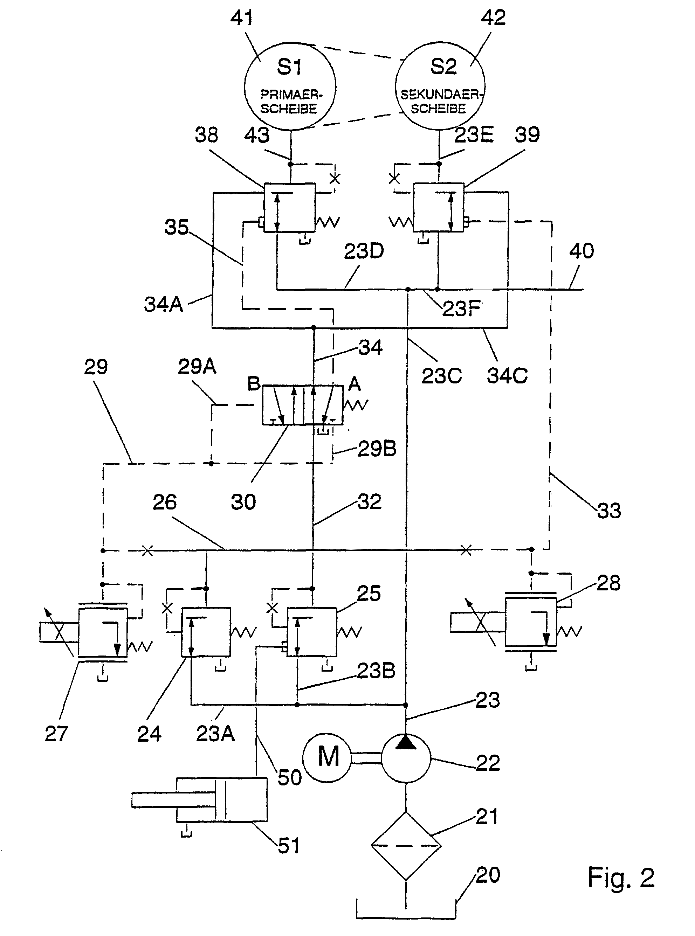

Fig. 2 zeigt ein Ausführungsbeispiel einer erfindungsgemäßen Einrichtung mit antriebsmomentenmoduliertem Druckregelventil für die Variatoransteuerung, wobei der Notlaufbetrieb nur über ein Notventil 30 erfolgt. Auch hier ist mit 51 ein Hydromotor bezeichnet, der wiederum als hydraulischer Linearmotor oder hydraulischer Drehmotor ausgeführt sein kann. Der Hydromotor 51 ist wieder über die Leitung 50 mit dem zweiten Druckreduzierventil 25 verbunden. Der Notfahrbetrieb des Notventils 30 ist durch die Stellung A bezeichnet. Das Sekundärventil 39 für die Sekundärscheibe S2 ist hierbei als Druckregelventil ausgeführt. Mit 40 ist eine Leitung für weitere mit dem Pumpendruck beaufschlagte Verbraucher bezeichnet, mit 34A die Verbindungsleitung zwischen der Ausgangsleitung 34 des Notventils 30 und dem Primärventil 38 und mit 34B die Verbindungsleitung zwischen der Leitung 34 und dem Sekundärventil 39.

Auch hierbei wird das Druckreduzierventile 25 durch den Hydromotor 51 mit den Motormomenten moduliert.

Die Unterschiede in den beiden Ausführungsformen nach Fig. 1 und 2 liegen im wesentlichen darin, daß bei der in Fig. 2 dargestellten Ausführungsform das zweite Notventil entfällt und das Sekundärventil 39 als Druckregelventil ausgestaltet ist.

Bei beiden Ausführungsformen erhält man also durch Anlegen des drehmomentabhängigen Signals an den Hydromotor die Einstellung eines variablen Druckniveaus bei konstantem, statischen Druckverhältnis von Primär- zur Sekundärscheibe.

Im Notfahrbetrieb steht das antriebsmomentäquivalente Signal uneingeschränkt zur Verfügung, d. h. auch bei vollständigem Ausfall der elektronischen Steuerung. Die hydraulische Signalübertragung an die hydraulische Getriebesteuerung über das Druckreduzierventil führt zu einem robusten Systemaufbau, wobei als Eingangsgröße das motormomentenäquivalente Signal für die Modulation von Kupplung und Variator verwendet wird. Das System ist unabhängig von der Motorsteuerung; die Notlauffähigkeit durch Einbindung des hydraulischen Drehmomentensignals in die Getriebehydraulik ist in Verbindung mit der vorgesehenen Notfahreinrichtung mit einem oder zwei Notventilen gewährleistet, mit zugleich weitem Übersetzungsbereich, durch konstantes, statisches Druckverhältnis zwischen Primär- und Sekundärscheibe des Variators; der motormomentenabhängige Anpreßdruck im Variator während des Notlaufbetriebes zur Reduzierung der Überanpressung wird durch das antriebsmomentenmodulierte Druckregelventil gewährleistet.

### Bezugszeichen

- 20: Schmiermittelsumpf
- 21: Filter
- 22: Pumpe
- 23: Leitung
- 23A: Leitung
- 23B: Leitung
- 23C: Leitung
- 23D: Leitung
- 23E: Leitung
- 23F: Leitung
- 24: erstes Druckreduzierventil
- 25: zweites Druckreduzierventil
- 26: Leitung
- 27: erstes elektromagnetisches Druckregelventil
- 28: zweites elektromagnetisches Druckregelventil
- 29: Leitung
- 29A: Leitung
- 29B: Leitung
- 30: erstes Notventil
- 31: zweites Notventil
- 32: Leitung
- 32A: Leitung
- 33: Leitung
- 34: Leitung
- 34A: Leitung
- 34B: Leitung
- 35: Leitung
- 36: Leitung
- 37: Leitung
- 38: Primärventil
- 39: Sekundärventil
- 40: Leitung
- 41: Verstellraum Primärscheibe
- 42: Verstellraum Sekundärscheibe
- 43: Leitung
- 50: Leitung
- 51: Hydromotor

- S1: Primärscheibe
- S2: Sekundärscheibe

## Patentansprüche

1. Einrichtung zum Steuern eines Automatikgetriebes, insbesondere eines CVT, das mit einem pendelnd aufgehängten Antrieb, insbesondere einem Verbrennungsmotor für ein Kraftfahrzeug mit Front-Quer-Antrieb, verbunden ist, wobei das Getriebe ein elektrohydraulisches Steuergerät aufweist, das über elektromagnetische Stellglieder und hydraulische Ventile die Stellräume (41, 42) der Primär- und Sekundärscheiben (S1, S2) des CVT ansteuert, sowie eine Notlaufeinrichtung aufweist, die zwei Druckregelventile (27, 28), zwei Druckreduzierventile (24, 25) und mindestens ein Notventil (30, 31) aufweist, **dadurch gekennzeichnet, daß** dem Antrieb eine Drehmomentenstütze zugeordnet ist, die mit einem Sensor versehen ist, dessen Ausgangssignal eine Funktion der Größe und der Dynamik des Motormoments ist, daß der Sensor als Hydromotor (51) ausgebildet ist, der mit der motormomentenäquivalenten Stützkraft oder dem motormomentenäquivalenten Verlagerungsweg der Antriebseinheit an der Drehmomentenstütze beaufschlagt wird und daraus ein hydraulisches Ausgangssignal erzeugt, und daß der Hydromotor (51) mit dem zweiten Druckreduzierventil (25) über eine Leitung (50) hydraulisch verbunden ist.

2. Einrichtung nach einem der vorhergehenden Ansprüche, **dadurch gekennzeichnet, daß** der Hydromotor (51) ein Linearmotor ist.

3. Einrichtung nach einem der vorhergehenden Ansprüche, **dadurch gekennzeichnet, daß** der Hydromotor (51) ein Drehmotor ist.

4. Einrichtung nach einem der vorhergehenden Ansprüche, **dadurch gekennzeichnet, daß** der Hydromotor über eine parallel zur Leitung (50) oder parallel zur Leitung (32) liegende weitere Leitung hydraulisch mit dem Sekundärventil (39) verbunden ist, zur Modulation des Sekundärdrucks mit dem motormomentenäquivalenten Ausgangssignal des Hydromotors.

5. Einrichtung nach einem der Ansprüche 1 bis 3, **dadurch gekennzeichnet, daß** der Hydromotor über eine parallel zur Leitung (50) oder parallel zur Leitung (32) liegende weitere Leitung hydraulisch mit einem Kupplungsdruckventil verbunden ist, zur Modulation des Kupplungsdruckes mit dem motormomentenäquivalenten Ausgangssignal des Hydromotors.

## Claims

1. Device for the control of an automatic transmission, especially of a CVT, which is linked to a pendulous drive, especially a combustion engine for a motor vehicle having front-transverse drive; the transmission being provided with an electro-hydraulic control unit, which via electromagnetic actuators and hydraulic valves controls the manipulation areas (41, 42) of the primary and secondary disks (S1, S2) of the CVT, and also with an emergency mode device having two pressure-regulating valves (27, 28), two pressure-reducing valves (24, 25) and at least one safety valve (30, 31),
**characterized**
**in that** the drive has a torque arm assigned to it, which is equipped with a sensor, whose output signal is a function of the size and dynamics of the motor torque; in that the sensor is a fluid motor (51), which is operated by the motor torque-equivalent supporting force or the motor torque-equivalent displacement path of the drive unit on the torque arm and thus produces a hydraulic output signal; and in that the fluid motor (51) is hydraulically linked via a line (50) to the second pressure-reducing valve (25).

2. Device in accordance with one of the preceding claims,
**characterized**
**in that** the fluid motor (51) is a linear motor.

3. Device in accordance with one of the preceding claims,
**characterized**
**in that** the fluid motor (51) is a torque motor.

4. Device in accordance with one of the preceding claims,
**characterized**
**in that** the fluid motor (51) is hydraulically linked to the secondary valve (39) via a line parallel to line (50) or parallel to line (32), for the purpose of secondary pressure modulation by the motor torque-equivalent output signal of the fluid motor.

5. Device in accordance with one of the claims 1 to 3,
**characterized**
**in that** the fluid motor (51) is hydraulically linked to a clutch pressure valve via a line parallel to line (50) or parallel to line (32), for the purpose of clutch pressure modulation by the motor torque-equivalent output signal of the fluid motor.

## Revendications

1. Dispositif de commande d'une boîte de vitesses automatique, en particulier une boîte à variation continue, lié à un système de propulsion suspendu de façon flottante, en particulier un moteur à combustion interne pour un véhicule automobile à traction avant transversale, sachant que la boîte de vitesses est dotée d'un dispositif de commande électrohydraulique pilotant au moyen d'actionneurs électromagnétiques et valves hydrauliques les espaces de réglage (41, 42) des disques primaire et secondaire (S1, S2) de la boîte CVT et doté d'un dispositif de fonctionnement de secours pourvu de deux valves de régulation de la pression (27, 28), de deux valves de réduction de la pression (24, 25) et d'au moins une valve de secours (30, 31), **caractérisé en ce que** au système de propulsion est associée une bielle de réaction dotée d'un capteur dont le signal de sortie est une fonction de l'ampleur et de la dynamique du couple moteur, **en ce que** le capteur est conçu comme un moteur hydraulique (51) qui est pressurisé avec la force de soutien équivalente au couple moteur ou avec la course de déplacement équivalente au couple moteur de l'unité d'entraînement au niveau de la bielle de réaction, et **en ce qu'**il en génère un signal de sortie hydraulique et **en ce que** le moteur hydraulique (51) est lié à travers une conduite (50) de façon hydraulique à la deuxième valve de réduction de la pression (25).

2. Dispositif selon une des revendications précédentes, **caractérisé en ce que** le moteur hydraulique (51) est un moteur électrique linéaire.

3. Dispositif selon une des revendications précédentes, **caractérisé en ce que** le moteur hydraulique (51) est un moteur vireur.

4. Dispositif selon une des revendications précédentes, **caractérisé en ce que** le moteur hydraulique est lié de façon hydraulique à la valve secondaire (39), et cela par l'intermédiaire d'une conduite disposée parallèlement à la conduite (50) ou parallèlement à la conduits (32), pour moduler la pression secondaire à l'aide du signal de sortie équivalent au couple moteur du moteur hydraulique.

5. Dispositif selon une des revendications 1 à 3, **caractérisé en ce que** le moteur hydraulique est lié de façon hydraulique à la valve de pression d'embrayage, et cela par l'intermédiaire d'une conduite disposée parallèlement à la conduite (50) ou parallèlement à la conduite (32), pour moduler la pression d'embrayage à l'aide du signal de sortie équivalent au couple moteur du moteur hydraulique.
